# EUROPÄISCHE PATENTSCHRIFT

(11) **EP 2 146 607 B1**
(45) Veröffentlichungstag und Bekanntmachung des Hinweises auf die Patenterteilung: **20.10.2010**
(21) Anmeldenummer: 08734404.0
(22) Anmeldetag: 27.03.2008
(51) Int. Cl.: A47J 27/08, A47J 36/02

(54) **BEHÄLTNIS ZUM ERWÄRMEN VON NAHRUNGSMITTELN MITTELS MIKROWELLEN**
RECEPTACLE FOR HEATING FOOD BY MEANS OF MICROWAVES
RÉCIPIENT POUR RÉCHAUFFER DES ALIMENTS À L'AIDE DE MICRO-ONDES

(30) Priorität: 20.04.2007 DE 102007019198; 23.11.2007 DE 202007016537 U
(43) Veröffentlichungstag der Anmeldung: 27.01.2010
(73) Patentinhaber: Mühleisen, Michael, 26125 Oldenburg (DE)
(72) Erfinder: Mühleisen, Michael, 26125 Oldenburg (DE)
(74) Vertreter: von den Steinen, Axel
(86) Internationale Anmeldenummer: PCT/DE2008/000466
(87) Internationale Veröffentlichungsnummer: WO 2008/128493

(56) Entgegenhaltungen:
- EP-B1- 0 971 849
- US-A1- 2006 043 093

## Beschreibung

Die Erfindung betrifft ein Behältnis zum Erwärmen, insbesondere zum Garen und/oder Regenerieren, von Nahrungsmitteln mittels Mikrowellen gemäß dem Oberbegriff des Anspruchs 1. Die DE 203 16 277 U1 beschreibt ein gattungsgemäßes Behältnis, das ein schalenartiges Unterteil umfasst, welches mit einem Deckel verschließbar ist. Zum Ablassen des bei der Erwärmung der Nahrungsmittel aufgrund der Dampfbildung sich im Garraum bildenden Innendrucks, durch den das Behältnis zum Bersten gebracht werden kann, ist die Verbindung zwischen Deckel und Unterteil derart ausgebildet, dass bei Erreichen eines bestimmten Grenzdrucks der Deckel angehoben wird, wodurch der Dampf aus dem Behältnis nach außen entweichen kann.

Die DE 20 2004 009 000 U1 beschreibt ein gattungsgemäßes Behältnis, bei dem zum Ablassen eines unzulässig hohen Überdrucks ein Überdruckventil vorgesehen ist, das sich bei Erreichen eines bestimmten Grenzdrucks wiederum öffnet.

Die EP 0 971 849 B1 beschreibt eine Transport- und Verkaufsverpackung, die ebenfalls mit einem Ventil zur Begrenzung des sich im Garraum bildenden Überdrucks vorgesehen ist. Dieses Ventil schließt sich automatisch und selbsttätig, sobald der Innendruck im Garraum unter eine bestimmte Druckdifferenz gegenüber dem Außendruck fällt.

Die US 2006/0043093 A1 beschreibt ein Mikrowellengefäß zur Erwärmung von Speisen, das mit einem Deckel verschlossen werden kann. In einer Ausnehmung des Deckels wird dabei außerdem ein Ventilfilm angeordnet, mit dem Druck aus dem Inneren des Gefäßes abgelassen werden kann. Der Ventilfilm zeichnet sich dadurch aus, dass er Druck aus dem Gefäß ablässt, sobald zwischen dem Gefäßinnenraum und der Außenatmosphäre eine ausreichende Druckdifferenz vorhanden ist.

Allen bekannten Behältnissen zur Erwärmung von Nahrungsmitteln mittels Mikrowellen ist es gemeinsam, dass die verwendeten Ventileinrichtungen sich bei Unterschreiten eines bestimmten Überdrucks im Garraum automatisch schließen. Dieses Verschließen der Ventile hat dabei den Zweck, einen Schutz der im Garraum befindlichen Nahrungsmittel während der Lagerung und des Transports zu gewährleisten. Erst wenn die Nahrungsmittel durch die Mikrowellen erhitzt werden und somit der Verzehr der Nahrungsmittel unmittelbar bevorsteht, öffnet sich das in der Gasdurchtrittsöffnung vorgesehene Ventil, wobei in dieser Phase der Hygieneschutz durch den durch die Gasdurchtrittsöffnung austretenden Heißdampf gewährleistet ist.

Die bekannten Behältnisse haben also den Nachteil, dass aufgrund des Hygieneschutzes ein Druckausgleich zwischen Garraum und Außenatmosphäre nur unter bestimmten Bedingungen, nämlich bei Vorhandensein eines ausreichenden Überdrucks im Garraum, möglich ist. Herrscht dagegen ein Überdruck in der Außenatmosphäre gegenüber dem Druck im Garraum, so kann ein Druckausgleich nicht stattfinden, da das Ventil geschlossen ist. Diese Situation kann beispielsweise bei Lufttransporten von vorgekochten Nahrungsmitteln, wie sie im militärischen Versorgungsbereich notwendig sind, auftreten. Aufgrund des Überdrucks in der Außenatmosphäre kann es dann zu einer unerwünschten Verformung des Behältnisses kommen, da ein Druckausgleich durch die Gasdurchtrittsöffnung in dieser Richtung nicht möglich ist.

Aufgabe der vorliegenden Erfindung ist es deshalb, ein neues Behältnis zum Erwärmen von Nahrungsmitteln vorzuschlagen, das eine ausreichende Hygiene der Nahrungsmittel im Behältnis gewährleistet und zugleich einen jederzeitigen Druckausgleich zwischen Garraum und Außenatmosphäre ermöglicht.

Diese Aufgabe wird durch ein Behältnis nach der Lehre des Anspruchs 1 gelöst.

Vorteilhafte Ausführungsformen der Erfindung sind Gegenstand der Unteransprüche.

Erfindungsgemäß ist in der Gasdurchtrittsöffnung des Behältnisses ein Hygieneschutzelement mit einem mikroporösen Strukturelement angeordnet. Das mikroporöse Strukturelement des Hygieneschutzelements zeichnet sich dabei dadurch aus, dass in ihm Mikroporen vorgesehen sind. Diese Mikroporen sind dabei einerseits so klein, dass Schmutzpartikel nicht in den Garraum eintreten können und dadurch die erforderliche Hygiene gewährleistet ist. Zugleich bilden die Mikroporen in ihrer Gesamtheit Durchgangsöffnungen, durch die ein Gasaustausch in beide Richtungen jederzeit möglich ist. Durch diese von den Mikroporen gebildeten Durchgangsöffnungen kann während der Erwärmung der Nahrungsmittel der Dampf aus dem Garraum austreten, um den Aufbau eines unzulässig hohen Überdrucks im Garraum zu verhindern. Umgekehrt ist es durch die von den Mikroporen gebildeten Durchgangsöffnungen auch möglich, dass Luft aus der Außenatmosphäre in den Garraum eintritt. Somit bildet das Hygieneschutzelement mit den Mikroporen ein Gasdrosselelement, das zwar einen dynamischen Druckwiderstand aufbauen kann, beispielsweise um während des Dampfaustritts einen gewünschten Staudruck im Garraum aufzubauen, das jedoch keine statischen Druckunterschiede zwischen Garraum und Außenatmosphäre zulässt, so dass sich nach einer bestimmten Zeit immer ein Druckausgleich zwischen Garraum und Außenatmosphäre einstellt.

Aus welchem Material und in welcher Bauart das mikroporöse Strukturelement ausgebildet ist, ist grundsätzlich beliebig. Besonders geeignet sind mikroporöse Strukturelemente aus hydrophobem Werkstoff, da diese hydrophoben Werkstoffe die Benetzung mit Feuchtigkeitspartikeln verhindern. Weiter sollte das mikroporöse Strukturelement aus einem reinigungsmittelbeständigem Werkstoff hergestellt sein, um Beschädigungen des mikroporösen Strukturelements durch die Reinigung des Behältnisses auszuschließen, da beispielsweise in gewerblichen Geschirrspülern aggressive Laugen und/oder Säuren als Reinigungsmittel zum Einsatz kommen. Insbesondere expandiertes Polytetrafluorethylen (ePTFE) ist zur Bildung des mikroporösen Strukturelements geeignet, da dieses Material hydrophobe Eigenschaften aufweist und säure- und/oder laugenfest ist.

Um das mikroporöse Strukturelement vor unerwünschten Verformungen zu schützen, kann es auf einem gasdurchlässigen Trägerelement, beispielsweise auf einem Vlies, auf einer Lochfolie oder auf einer Lochplatte, angeordnet werden.

Das Trägerelement selbst kann bevorzugt aus Polypropylen oder Polyethylen hergestellt sein.

Die dynamischen Druckdrosseleigenschaften des Hygieneschutzelements sind auf den jeweiligen Anwendungsfall abzustimmen. Besonders bevorzugt ist es allerdings, wenn das mikroporöse Strukturelement einen Luftdurchsatz von 0,5 l/h bis 5 l/h bei einem Druckunterschied von 12 mbar zwischen Garraum und Außenatmosphäre ermöglicht.

Der Wassereintrittsdruck des mikroporösen Strukturelements sollte bevorzugt bei mehr als 0,5 bar liegen.

Das erfindungsgemäße Behältnis kann wahlweise als Mehrwegbehälter oder Einwegbehälter ausgebildet sein. Bei Verwendung als Mehrwegbehälter sollte das Behältnis aus einem mikrowellendurchlässigen und mehrwegfähigen Material, insbesondere aus Polycarbonat, Polymethylpenten, Polypropylen, Glas und/oder Keramik, hergestellt sein.

Soll das Behältnis als Einwegverpackung dienen, so ist bei seiner Herstellung Einwegmaterial, insbesondere Kunststoff und/oder Papier, zu verwenden.

Um einen Schutz des Hygieneschutzelements vor mechanischen Beschädigungen zu gewährleisten, kann ein gasdurchlässiges Abdeckelement Verwendung finden, das das Hygieneschutzelement nach außen hin abdeckt und dadurch schützt.

Die Bauart des Behältnisses ist grundsätzlich beliebig. Nach einer bevorzugten Ausführungsform besteht das Behältnis aus einem nach oben offenen Gargefäß, beispielsweise einem Teller und einem Deckel. Der Deckel kann dabei beispielsweise in der Art einer Glosche ausgebildet sein, wie er zur Verwendung in Gemeinschafts-Verpflegungseinrichtungen bekannt ist. Durch Anbringung des Deckels auf dem Gargefäß wird der Garraum verschlossen.

Die Gasdurchtrittsöffnung mit dem daran befestigten Hygieneschutzelement zum Druckausgleich sollte dabei bevorzugt am Deckel vorgesehen sein.

Um ein Abheben des Deckels vom Gargefäß und eine dadurch nicht erwünschte Öffnung der Trennfuge zu verhindern, kann ein entsprechend geeigneter Verschluss, beispielsweise ein Bajonettverschluss, ein Drehverschluss, ein Schnappverschluss oder ein Rastverschluss, zum Einsatz kommen.

Außerdem ist es besonders vorteilhaft, wenn zwischen Deckel und Gargefäß ein Dichtungselement vorgesehen ist, um die Trennfuge zwischen Deckel und Gargefäß abzudichten und dadurch einen unkontrollierten Medienaustausch durch die Trennfuge auszuschließen.

Weiterhin ist es besonders vorteilhaft, wenn das Behältnis zumindest teilweise aus einem wärmeisolierenden Material hergestellt ist und/oder eine Wärmeisolation umfasst, um die gegarten Nahrungsmittel über einen bestimmten Zeitraum nach dem eigentlichen Erwärmen mittels Mikrowelle warm zu halten.

Werden die Lebensmittel in einem geschlossenen Behältnis durch den Einsatz von Mikrowellenstrahlen erwärmt, kann dies zu einer nachteiligen Kondensatbildung im Behälterinneren und einem unerwünscht schnellen Abkühlen der gegarten Lebensmittel führen. Der Grund hierfür liegt darin, dass das Behältermaterial aus mikrowellendurchlässigem Material gefertigt ist und somit im Wesentlichen keine bzw. nur sehr wenig Mikrowellenstrahlung absorbiert, so dass sich der Behälter selbst kaum erwärmt. Der vom erhitzten Lebensmittel abgegebene Dampf trifft also normalerweise auf eine relativ kalte Behälterinnenwandung und kann sich dort als unerwünschtes Kondensat niederschlagen. Nach Beendigung des Garvorgangs führt die fehlende Eigenerwärmung des Behälters zu einer schnellen Abkühlung der eingebrachten Lebensmittel. Insbesondere bei Einsatz erfindungsgemäßer Behälter im Rahmen der Patientenversorgung über längere Strecken kühlt das Essen also relativ schnell ab, und durch tropfendes Kondensat auf die Speisen wird eine Verschlechterung der Sensorik verursacht. Zur Vermeidung dieser Effekte kann das erfindungsgemäße Behältnis, insbesondere das Gargefäß, beispielsweise der Teller, und/oder der Deckel, beispielsweise die Glosche, ein Wärmespeicherelement umfassen. Dabei ist insbesondere auch daran gedacht, dass das Gargefäß und/oder der Deckel selbst in der Art eines Wärmespeicherelements ausgebildet ist. In dem Wärmespeicherelement kann eine bestimmte Menge an Wärmeenergie gespeichert und dann nach Abschluss des Garvorgangs an die Lebensmittel abgegeben werden, um auf diese Weise die unerwünschte Kondensatbildung zu vermeiden bzw. zu vermindern und den Abkühlvorgang zu verlangsamen.

In welcher Weise das Wärmespeicherelement selbst erwärmt wird, ist grundsätzlich beliebig. Besonders einfach kann dies erreicht werden, wenn das Wärmespeicherelement aus einem Mikrowellenstrahlen absorbierenden Material hergestellt ist, so dass durch die Mikrowellenstrahlen nicht nur die Lebensmittel, sondern auch das Wärmespeicherelement erwärmt werden. Auf eine separate Erwärmung des Wärmespeicherelements kann auf diese Weise verzichtet werden.

Nach einer bevorzugten Ausführungsform der Erfindung wird die Wärmespeicherschicht von einer Lackschicht auf der Innenseite des Behälters gebildet. Der verwendete Lack muss dabei lebensmittelecht und temperaturbeständig sein. Der Lack erhitzt sich bei Zufuhr der elektromagnetischen Energie durch die Mikrowellenstrahlen und gibt später diese Wärmeenergie an die Lebensmittel bzw. an das umgebende Material des Gefäßes ab.

Das Wärmespeicherelement selbst kann als Wärmespeicherschicht ausgebildet sein und an bzw. auf der Innenseite des Behältnisses angeordnet werden. Auf diese Weise kann die im Wärmespeicherelement gespeicherte Wärme sehr direkt an die Lebensmittel abgegeben werden, wobei eine großflächige Wärmewirkung erzielt wird.

Nach einer bevorzugten Ausführungsvariante ist die Wärmespeicherschicht zwischen einer Wärmeleitschicht, insbesondere aus Keramik, auf der Innenseite des Behältnisses und einer Wärmeisolatorschicht, insbesondere aus Kunststoff, an der Außenseite des Behältnisses angeordnet. Auf diese Weise wird die Wärmespeicherschicht beidseitig vor unerwünschten Einflüssen geschützt und kann aufgrund der Wärmeleiteigenschaften der Wärmeleitschicht ihre Wärme gut an die im Innenraum befindlichen Lebensmittel abgeben, wohingegen unerwünschte Wärmeverluste nach außen hin durch die Wärmeisolatorschicht verhindert werden. Die Wärmespeicherschicht kann dabei beispielsweise von einem geeigneten Gel oder Wachs gebildet werden.

Eine Ausführungsform der Erfindung ist in den Zeichnungen schematisch dargestellt und wird nachfolgend beispielhaft erläutert.

Es zeigen:
- Fig. 1: ein Behältnis zum Erwärmen von Nahrungsmitteln mittels Mikrowellen im schematisierten Querschnitt;
- Fig. 2: das Hygieneschutzelement des Behältnisses gemäß Fig. 1 im Querschnitt.

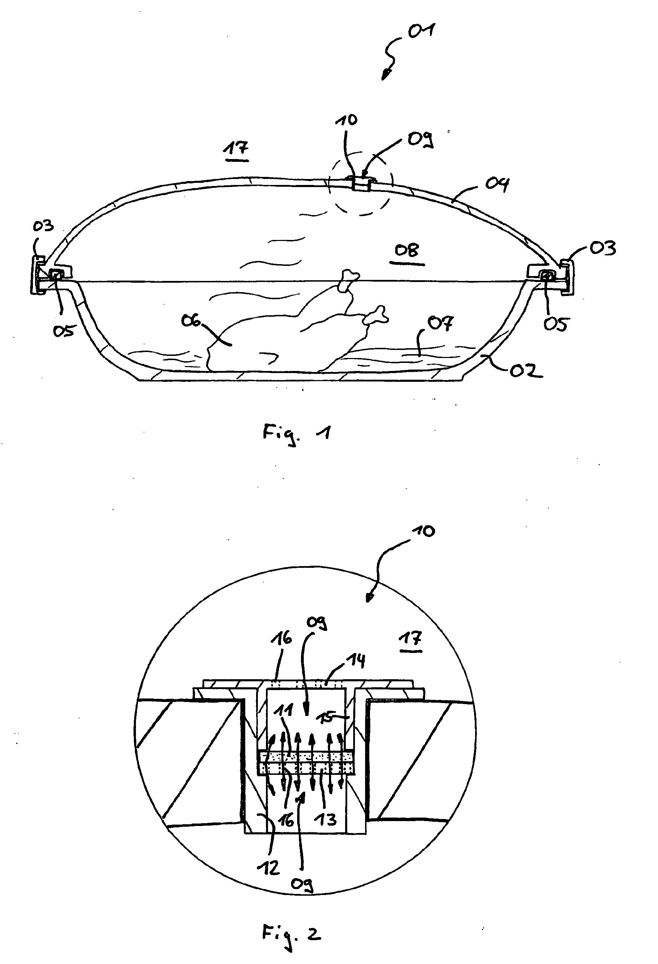

Fig. 1 zeigt ein Behältnis 01, bestehend aus einem Teller 02 und einem auf der Oberseite mittels Verschlüssen 03 befestigbaren Deckel 04. Der Teller 02 und der Deckel 04 bestehen beide aus mikrowellentauglichem Material, beispielsweise der Teller 02 aus Porzellan und der Deckel 04 aus Kunststoff. Um die Trennfuge zwischen Teller 02 und Deckel 04 abzudichten, ist am Saum des Deckels 04 eine kreisringförmige Dichtung 05 vorgesehen, die an der Oberseite des Rands des Tellers 02 zur Anlage kommt.

Beim Erwärmen von Nahrungsmitteln 06 und 07 durch Mikrowelleneinwirkung wird in den Nahrungsmitteln 06 und 07 enthaltenes Wasser verdampft, so dass sich im Garraum 08 Heißdampf bildet. Könnte dieser Heißdampf nicht aus dem Garraum 08 entweichen, würde der Deckel 04 vom Teller 02 abgesprengt und das Behältnis 01 zerstört werden. Um dies zu verhindern, weist der Deckel 04 eine Gasdurchtrittsöffnung 09 auf, in der ein Hygieneschutzelement 10 angeordnet ist.

Den Aufbau des Hygieneschutzelements 10 zeigt Fig. 2. Das Kernstück des Hygieneschutzelements 10 bildet ein mikroporöses Strukturelement 11, dessen Mikroporen mikroskopisch kleine Durchgangsöffnungen bilden. Um das mikroporöse Strukturelement 11 in der Gasdurchtrittsöffnung 09 festlegen zu können, sind eine Befestigungshülse 12, eine Lochplatte 13 und ein Abdeckelement 14 vorgesehen. Bei der Montage des Hygieneschutzelements 10 wird zunächst die Befestigungshülse 12 in die Durchgangsbohrung des Deckels 04 eingesteckt und anschließend die Lochplatte 13 auf einem dafür vorgesehenen Absatz am Innendurchmesser der Befestigungshülse 12 angebracht. Auf die Lochplatte 13 wird dann das mikroporöse Strukturelement 11, das beispielsweise aus expandiertem Polytetrafluorethylen besteht, aufgelegt. Zur Fixierung des mikroporösen Strukturelements 11 auf der Lochplatte 13 wird anschließend das Abdeckelement 14 von oben in die Befestigungshülse 12 eingesteckt und fixiert mit einem hülsenförmigen Fortsatz 15 des Abdeckelements 14. Die Lochplatte 13 und das Abdeckelement 14 sind jeweils mit Durchgangslöchern 16 versehen, so dass ein Medienaustausch beidseitig des mikroporösen Strukturelements 11 möglich ist. Der Gasaustausch durch das mikroporöse Strukturelement 11 selbst wird in beide Richtungen durch die im Strukturelement 11 vorgesehenen Mikroporen gewährleistet. Somit kann bei Überdruck im Garraum 08 der sich dort bildende Dampf von unten durch die Lochplatte 13, das mikroporöse Strukturelement 11 und das Abdeckelement 14 in die Außenatmosphäre 17 austreten. Herrscht dagegen in der Außenatmosphäre 17 ein Überdruck gegenüber dem Garraum 08, kann Luft aus der Außenatmosphäre 17 auch in die Gegenrichtung durch das Abdeckelement 14, das mikroporöse Strukturelement 11 und die Lochplatte 13 in den Garraum 08 eintreten. Somit ist jederzeit ein statischer Druckausgleich gewährleistet. Lediglich im dynamischen Druckbereich, insbesondere bei Bildung von Dampf im Garraum 08, kann sich ein bestimmter Überdruck im Garraum 08 bilden, da der dynamische Druckwiderstand des mikroporösen Strukturelements einen dynamischen Staudruck verursacht. Sobald kein neuer Dampf mehr im Garraum 08 gebildet wird, folgt wiederum sofort ein statischer Druckausgleich.

### Bezugszeichenliste

- 01: Behältnis
- 02: Teller
- 03: Verschluss
- 04: Deckel
- 05: Dichtung
- 06: Nahrungsmittel
- 07: Nahrungsmittel
- 08: Garraum
- 09: Gasdurchtrittsöffnung
- 10: Hygieneschutzelement
- 11: Mikroporöses Strukturelement
- 12: Befestigungshülse
- 13: Lochplatte
- 14: Abdeckelement
- 15: Fortsatz
- 16: Durchgangsöffnung
- 17: Außenatmosphäre

## Patentansprüche

1. Behältnis (01) zum Erwärmen, insbesondere Garen und/oder Regenerieren, von Nahrungsmitteln (06, 07) mittels Mikrowellen, wobei das Behältnis (01) zumindest teilweise aus mikrowellendurchlässigem Material besteht, und wobei das Behältnis (01) einen geschlossenen Garraum (08) zur Aufnahme der Lebensmittel (06, 07) bildet, und wobei der Garraum (08) eine Gasdurchtrittsöffnung (09) aufweist, die den Austritt von Dampf aus dem Garraum (08) beim Erwärmen der Nahrungsmittel (06, 07) ermöglicht,
**dadurch gekennzeichnet,**
**dass** in der Gasdurchtrittsöffnung (09) ein Hygieneschutzelement (10) angeordnet ist, wobei das Hygieneschutzelement (10) ein mikroporöses Strukturelement (11) mit Mikroporen aufweist, und wobei die Mikroporen des Strukturelements (11) den Eintritt von Schmutzpartikeln in den Garraum (08) ausschließen, und wobei die Mikroporen des Strukturelements (11) einen jederzeitigen Gasaustausch in beide Richtungen zum Austritt von Dampf aus dem Garraum (08) und zum Eintritt von Luft in den Garraum (08) ermöglichen.

2. Behältnis nach Anspruch 1,
**dadurch gekennzeichnet,**
**dass** das mikroporöse Strukturelement (11) aus einem hydrophoben und/oder reinigungsmittelbeständigen Werkstoff, insbesondere aus expandiertem, säure- und/oder laugenfestem Polytetrafluorethylen (ePTFE), besteht.

3. Behältnis nach Anspruch 1 oder 2,
**dadurch gekennzeichnet,**
**dass** das mikroporöse Strukturelement (11) auf einem gasdurchlässigen Trägerelement, insbesondere auf einem Vlies oder einer Lochfolie oder einer Lochplatte (13), angeordnet ist.

4. Behältnis nach Anspruch 3,
**dadurch gekennzeichnet,**
**dass** das Trägerelement (13) aus Polypropylen (PP) oder Polyethylen (PE) besteht.

5. Behältnis nach einem der Ansprüche 1 bis 4,
**dadurch gekennzeichnet,**
**dass** das mikroporöse Strukturelement (11) des Hygieneschutzelements einen Luftdurchsatz bei einem Druckunterschied von 12 mbar zwischen Garraum und Außenatmosphäre im Bereich von 0,5 l/h bis 5 l/h aufweist.

6. Behältnis nach einem der Ansprüche 1 bis 5,
**dadurch gekennzeichnet,**
**dass** das mikroporöse Strukturelement (11) des Hygieneschutzelements einen Wassereintrittsdruck von mehr als 0,5 bar aufweist.

7. Behältnis nach einem der Ansprüche 1 bis 6,
**dadurch gekennzeichnet,**
**dass** das Behältnis (01) aus einem mehrwegfähigen Material, insbesondere Polycarbonat (PC), Polymethylpenten (PMP), Polypropylen (PP), Glas und/oder Keramik, hergestellt ist.

8. Behältnis nach einem der Ansprüche 1 bis 6,
**dadurch gekennzeichnet,**
**dass** das Behältnis aus einem Einwegmaterial, insbesondere Kunststoff und/oder Papier, hergestellt ist.

9. Behältnis nach einem der Ansprüche 1 bis 8,
**dadurch gekennzeichnet,**
**dass** das mikroporöse Strukturelement (11) nach außen durch ein gasdurchlässiges Abdeckelement (14) abgedeckt wird.

10. Behältnis nach einem der Ansprüche 1 bis 9,
**dadurch gekennzeichnet,**
**dass** das Behältnis (01) ein oben offenes Gargefäß, insbesondere einen Teller (02), und einen Deckel (04), insbesondere eine Glosche, zum Verschließen des Gargefäßes umfasst.

11. Behältnis nach Anspruch 10,
**dadurch gekennzeichnet,**
**dass** das Hygieneschutzelement (10) am Deckel (04) vorgesehen ist.

12. Behältnis nach Anspruch 10 oder 11,
**dadurch gekennzeichnet,**
**dass** das Verbinden des Deckels (04) mit dem Gargefäß (02) durch einen Bajonettverschluss, einen Drehverschluss, einen Schnappverschluss oder einen Rastverschluss erfolgt.

13. Behältnis nach einem der Ansprüche 10 bis 12,
**dadurch gekennzeichnet,**
**dass** zwischen Deckel (04) und Gargefäß (02) ein Dichtungselement (05) vorgesehen ist, mit dem die Trennfuge zwischen Deckel (04) und Gargefäß (02) abgedichtet wird.

14. Behältnis nach einem der Ansprüche 1 bis 13,
**dadurch gekennzeichnet,**
**dass** das Behältnis (01) zumindest teilweise aus einem wärmeisolierenden Material hergestellt ist und/oder eine Wärmeisolation umfasst, um die gegarten Nahrungsmittel (06, 07) über eine bestimmte Zeit warm zu halten.

15. Behältnis nach einem der Ansprüche 1 bis 14,
**dadurch gekennzeichnet,**
**dass** das Behältnis (01), insbesondere das Gargefäß (02), der Teller und/oder der Deckel (04), ein Wärmespeicherelement umfasst.

16. Behältnis nach Anspruch 15,
**dadurch gekennzeichnet,**
**dass** das Wärmespeicherelement zumindest teilweise aus einem Material hergestellt ist, das Mikrowellenstrahlung absorbiert und zumindest teilweise in Wärme umwandelt.

17. Behältnis nach Anspruch 16,
**dadurch gekennzeichnet,**
**dass** die Mikrowellenstrahlung absorbierende Wärmespeicherschicht von einer Lackschicht auf der Innenseite des Behältnisses (01) gebildet wird.

18. Behältnis nach einem der Ansprüche 15 bis 17,
**dadurch gekennzeichnet,**
**dass** das Wärmespeicherelement als Wärmespeicherschicht an oder auf der Innenseite des Behältnisses (01) angeordnet ist.

19. Behältnis nach einem der Ansprüche 15 bis 18,
**dadurch gekennzeichnet,**
**dass** die Wärmespeicherschicht zwischen einer Wärmeleitschicht, insbesondere aus Keramik, auf der Innenseite des Behältnisses (01) und einer Wärmeisolatorschicht, insbesondere aus Kunststoff, auf der Außenseite des Behältnisses (01) angeordnet ist.

## Claims

1. Receptacle (01) for heating, particularly cooking and/or regenerating, food (06, 07) by means of microwaves, wherein the receptacle (01) is made at least partially of a microwave-permeable material, and wherein the receptacle (01) forms a closed cooking space (08) for receiving the food (06, 07), and wherein the cooking space (08) has a gas passage opening (09), which enables steam to escape from the cooking space (08) when the food is being heated (06, 07), **characterized in that**
a hygiene protective element (10) is disposed in the gas passage opening (09), wherein the hygiene protective element (10) comprises a microporous structural element (11) having micropores, and wherein the micropores of the structural element (11) prevent dirt particles from entering the cooking space (08), and wherein the micropores of the structural element (11) enable gas exchange in both directions at all times to allow steam to escape from the cooking space (08) and air to enter the cooking space (08).

2. Receptacle according to claim 1,
**characterized in that**
the microporous structural element (11) is composed of a hydrophobic and/or detergent-resistant material, in particular of expanded acid-resistant and/or alkali-resistant polytetrafluorethylene (ePTFE).

3. Receptacle according to claim 1 or 2,
**characterized in that**
the microporous structural element (11) is disposed on a gas-permeable carrier element, in particular a non-woven fabric or a perforated foil or a perforated plate (13).

4. Receptacle according to claim 3,
**characterized in that**
the carrier element (13) is composed of polypropylene (PP) or polyethylene (PE).

5. Receptacle according to any of claims 1 to 4,
**characterized in that**
the microporous structural element (11) of the hygiene protective element exhibits an airflow rate in the range of 0.5 l/h to 5 l/h at a pressure difference of 12 mbar between cooking space and external atmosphere.

6. Receptacle according to any of claims 1 to 5,
**characterized in that**
the microporous structural element (11) of the hygiene protective element exhibits a water entry pressure greater than 0.5 bar.

7. Receptacle according to any of claims 1 to 6,
**characterized in that**
the receptacle (01) is made of a recyclable material, in particular polycarbonate (PC), polymethylpentene (PMP), polypropylene (PP), glass and/or ceramics.

8. Receptacle according to any of claims 1 to 6,
**characterized in that**
the receptacle is made of a non-recyclable material, especially plastics and/or paper.

9. Receptacle according to any of claims 1 to 8,
**characterized in that**
the microporous structural element (11) is covered by a gas-permeable covering element (14) towards the outside.

10. Receptacle according to any of claims 1 to 9,
**characterized in that**
the receptacle (01) comprises a cooking vessel with an open top, particularly a dish (02), and a cover (04), particularly a cloche, for closing the cooking vessel.

11. Receptacle according to claim 10,
**characterized in that**
the hygiene protective element (10) is disposed at the cover (04).

12. Receptacle according to claim 10 or 11,
**characterized in that**
the connection between the cover (04) and the cooking vessel (02) is created by a bayonet catch, a turn-lock fastener, a snap fastener or a latching fastener.

13. Receptacle according to any of claims 10 to 12,
**characterized in that**
a sealing element (05) for sealing the separation joint between cover (04) and cooking vessel (02) is provided between cover (04) and cooking vessel (02).

14. Receptacle according to any of claims 1 to 13,
**characterized in that**
the receptacle (01) is made at least partially of a heat-insulating material and/or features a heat-insulating capacity for keeping the cooked food (06, 07) hot over a certain period of time.

15. Receptacle according to any of claims 1 to 14,
**characterized in that**
the receptacle (01), in particular the cooking vessel (02), the dish and/or the cover (04), comprises a heat-accumulating element.

16. Receptacle according to claim 15,
**characterized in that**
the heat-accumulating element is made at least partially of a material that absorbs microwave radiation and at least partially converts it into heat.

17. Receptacle according to claim 16,
**characterized in that**
the heat-accumulating layer absorbing the microwave radiation is formed by a lacquer layer on the inside of the receptacle (01).

18. Receptacle according to any of claims 15 to 17,
**characterized in that**
the heat-accumulating element is disposed at or on the inside of the receptacle (01) in the form of a heat-accumulating layer.

19. Receptacle according to any of claims 15 to 18,
**characterized in that**
the heat-accumulating layer is disposed between a heat-conducting layer, in particular made of ceramics, on the inside of the receptacle (01), and a heat-insulating layer, in particular made of plastics, on the outside of the receptacle (01).

## Revendications

1. Récipient (01) pour le chauffage, notamment pour la cuisson et/ou la régénération, d'aliments (06, 07) au moyen de micro-ondes, le récipient (01) étant constitué au moins en partie d'un matériau perméable aux micro-ondes, le récipient (01) formant un espace de cuisson (08) clos et destiné à loger les aliments (06, 07), l'espace de cuisson (08) présentant un orifice de passage de gaz (09) permettant à la vapeur de s'échapper de l'espace de cuisson (08) lorsque les aliments (06, 07) sont chauffés,
**caractérisé en ce qu'**
un élément protecteur de la hygiène (10) est prévu dans l'orifice de passage de gaz (09), l'élément protecteur de la hygiène (10) comprenant un élément structurel microporeux (11) présentant des micropores, les micropores de l'élément structurel (11) empêchant les particules de saleté d'entrer dans l'espace de cuisson (08), les micropores de l'élément structurel (11) permettant l'échange de gaz dans les deux directions à tous les temps afin de permettre à la vapeur de s'échapper de l'espace de cuisson (08) et à l'air d'entrer dans l'espace de cuisson (08).

2. Récipient selon la revendication 1,
**caractérisé en ce que**
l'élément structurel microporeux (11) est composé d'un matériau hydrophobe et/ou résistant aux détergents, notamment de polytétrafluoréthylène en expansion (ePTFE) résistant aux acides et/ou résistant aux alcalis.

3. Récipient selon la revendication 1 ou 2,
**caractérisé en ce que**
l'élément structurel microporeux (11) est agencé sur un élément porteur perméable aux gaz, notamment un tissu non-tissé ou une feuille perforée ou une plaque perforée (13).

4. Récipient selon la revendication 3,
**caractérisé en ce que**
l'élément porteur (13) est composé de polypropylène (PP) ou de polyéthylène (PE).

5. Récipient selon l'une quelconque des revendications 1 à 4,
**caractérisé en ce que**
l'élément structurel microporeux (11) de l'élément protecteur de la hygiène présente un débit d'air dans la plage de 0,5 l/h à 5 l/h sous une différence de pression de 12 mbar entre l'espace de cuisson et l'atmosphère extérieure.

6. Récipient selon l'une quelconque des revendications 1 à 5,
**caractérisé en ce que**
l'élément structurel microporeux (11) de l'élément protecteur de la hygiène présente une pression d'entrée d'eau supérieure à 0,5 bar.

7. Récipient selon l'une quelconque des revendications 1 à 6,
**caractérisé en ce que**
le récipient (01) est fabriqué d'un matériau recyclable, notamment de polycarbonate (PC), de polyméthylpentène (PMP), de polypropylène (PP), de verre et/ou de céramique.

8. Récipient selon l'une quelconque des revendications 1 à 6,
**caractérisé en ce que**
le récipient est fabriqué d'un matériau non-recyclable, notamment de matière plastique et/ou de papier.

9. Récipient selon l'une quelconque des revendications 1 à 8,
**caractérisé en ce que**
l'élément structurel microporeux (11) est recouvert vers l'extérieur par un élément de recouvrement (11) perméable aux gaz.

10. Récipient selon l'une quelconque des revendications 1 à 9,
**caractérisé en ce que**
le récipient (01) comprend une cuve de cuisson ouverte vers le haut, notamment une assiette (02), et un couvercle (04), notamment une cloche, pour fermer la cuve de cuisson.

11. Récipient selon la revendication 10,
**caractérisé en ce que**
l'élément protecteur de la hygiène (10) est agencé au couvercle (04).

12. Récipient selon la revendication 10 ou 11,
**caractérisé en ce que**
la liaison entre le couvercle (04) et la cuve de cuisson (02) est établie à l'aide d'une fermeture à baïonnette, une fermeture rotative, une fermeture à encliquetage ou une fermeture à enclenchement.

13. Récipient selon l'une quelconque des revendications 10 à 12,
**caractérisé en ce qu'**
entre le couvercle (04) et la cuve de cuisson (02) un élément d'étanchéité (05) est prévu pour étanchéifier la jointure de séparation entre le couvercle (04) et la cuve de cuisson (02).

14. Récipient selon l'une quelconque des revendications 1 à 13,
**caractérisé en ce que**
le récipient (01) est fabriqué au moins en partie d'un matériau d'isolation thermique et/ou présente une capacité d'isolation thermique afin de garder les aliments cuits (06, 07) chauds pendant une certaine période.

15. Récipient selon l'une quelconque des revendications 1 à 14,
**caractérisé en ce que**
le récipient (01), notamment la cuve de cuisson (02), l'assiette et/ou le couvercle (04), comprend un élément d'accumulation de chaleur.

16. Récipient selon la revendication 15,
l'élément d'accumulation de chaleur est fabriqué au moins en partie d'un matériau qui absorbe les micro-ondes et les transforme au moins partiellement en chaleur.

17. Récipient selon la revendication 16,
**caractérisé en ce que**
la couche d'accumulation de chaleur absorbant la radiation de micro-ondes est formée par une couche de laque sur l'intérieur du récipient (01).

18. Récipient selon l'une quelconque des revendications 15 à 17,
**caractérisé en ce que**
l'élément d'accumulation de chaleur est agencé à ou sur l'intérieur du récipient (01) en forme d'une couche d'accumulation de chaleur.

19. Récipient selon l'une quelconque des revendications 15 à 18,
**caractérisé en ce que**
la couche d'accumulation de chaleur est agencée entre la couche conductrice de chaleur, notamment fabriquée de céramique, à l'intérieur du récipient (01), et une couche d'isolation thermique, notamment fabriquée de matière plastique, à l'extérieur du récipient (01).
